# EUROPÄISCHE PATENTANMELDUNG

(11) **EP 3 620 877 A1**
(43) Veröffentlichungstag der Anmeldung: **11.03.2020**
(21) Anmeldenummer: 18192863.1
(22) Anmeldetag: 06.09.2018
(51) Int. Cl.: G05B 19/418

(54) **VERFAHREN ZUR SIMULATION EINER TECHNISCHEN ANLAGE, GERÄT, SYSTEM, COMPUTERPROGRAMM UND COMPUTERPROGRAMMPRODUKT**

(71) Anmelder: Siemens Aktiengesellschaft, 80333 München (DE)
(72) Erfinder: Ermler, Rene, 91058 Erlangen (DE); Puntel Schmidt, Philipp, 90453 Nürnberg (DE)

(57) **Zusammenfassung**

Die Erfindung betrifft ein Verfahren zur Simulation einer technischen Anlage (1), die eine Mehrzahl von Feldgeräten umfasst, die mit wenigstens einer insbesondere speicherprogrammierbaren Steuerung (2) über ein Kommunikationsnetzwerk (3) verbunden sind, wobei im Betrieb der Anlage (1) über das Kommunikationsnetzwerk (3) Datentelegramme (4), die neben Nutzdaten (5) jeweils eine Typangabe (11) umfassen, zwischen den Feldgeräten und der wenigstens einen Steuerung (2) gesendet werden, und wobei parallel zu dem Betrieb der Anlage (1) eine Simulation (15) erfolgt, wobei im Rahmen der Simulation (15) das Verhalten des realen Kommunikationsnetzwerkes (3) durch ein simuliertes Kommunikationsnetzwerk (18) abgebildet wird, wobei das reale Kommunikationsnetzwerk (3) und das simulierte Kommunikationsnetzwerk (18) gekoppelt sind und ein Netzwerk bilden, und wobei in dem simulierten Kommunikationsnetzwerk (18) Simulations-Datentelegramme (21) entstehen, die neben Nutzdaten (5) jeweils eine Typangabe (11) umfassen, und wobei für Simulations-Datentelegrammen (21) eine andere Typenangabe (11) vorgesehen ist als für von realen Feldgeräten oder einer realen Steuerung (2) stammende Real-Datentelegramme (4). Darüber hinaus betrifft die Erfindung ein Gerät (22), ein System, ein Computerprogramm und ein computerlesbares Medium.

## Beschreibung

Die Erfindung betrifft ein Verfahren zur Simulation einer technischen Anlage, die eine Mehrzahl von Feldgeräten umfasst, die mit wenigstens einer insbesondere speicherprogrammierbaren Steuerung über ein bevorzugt Ethernet-basiertes Kommunikationsnetzwerk, insbesondere in Form eines Ethernet-basierten Feldbusses, verbunden sind, wobei im Betrieb der Anlage über das Kommunikationsnetzwerk Datentelegramme, die neben Nutzdaten jeweils eine Typangabe, insbesondere in einem Header des jeweiligen Datentelegramms, umfassen, zwischen den Feldgeräten und der wenigstens einen Steuerung gesendet werden, und wobei parallel zu dem Betrieb der Anlage eine Simulation erfolgt. Darüber hinaus betrifft die Erfindung ein Gerät, ein System, ein Computerprogramm und ein computerlesbares Medium.

Technische Anlagen umfassen in der Regel mehrere prozessnahe Feldgeräte, die dazu dienen, Prozessgrößen zu erfassen und/oder zu beeinflussen. Dazu sind die Feldgeräte mit Sensoren und/oder Aktoren verbunden oder umfassen solche oder sind als solche ausgebildet.

Die Feldgeräte sind in der Regel mit einer oder mehreren Steuerungen verbunden, die in Form von einer oder mehreren speicherprogrammierbaren Steuerungen (SPS) vorliegen können.

Im Betrieb werden Messdaten, die mittels Sensoren prozessnah erfasst wurden, insbesondere in Echtzeit an die Steuerung(en) gesendet. Die Steuerung(en) ermittelt bzw. ermitteln unter Berücksichtigung der erfassten Messdaten Stellwerte für die Aktoren, und die Stellwerte werden wiederrum bevorzugt in Echtzeit von der bzw. den Steuerung(en) zu den betroffenen Feldgeräten gesendet.

Für die Kommunikation zwischen Steuerung(en) und Feldgeräten kann ein bevorzugt Ethernet-basiertes Kommunikationsnetzwerk vorgesehen sein (zu Ethernet siehe insbesondere IEEE 802.3). Kommunikationsnetzwerke für Feldgeräte werden auch als Feldbusse bezeichnet. Für den Fall, dass das Netzwerk Ethernetbasiert ist, spricht man auch von Ethernet-basierten Feldbussen. Es kann beispielsweise der offene Industrial-Ethernet Standard PROFINET zum Einsatz kommen, oder auch auf andere Protokolle zugegriffen werden.

Dabei werden üblicherweise sogenannte Datentelegramme, oder kurz Telegramme, gesendet, die neben dem eigentlichen Nutzdateninhalt (engl. "payload") weitere Angaben zu Adressierungs- und/oder Verwaltungszwecken umfassen, die in der Regel in einem den Nutzdaten vorangestellten Header des jeweiligen Telegramms enthalten sind.

Im zunehmenden Maße werden technische Anlagen, beispielswiese der Automatisierungstechnik, in eine virtuelle Realität abgebildet. Dies kann sowohl für die Planung einer Anlage, noch vor deren Aufbau und Inbetriebnahme, als auch parallel zum Betrieb einer bestehenden Anlage, etwa zur Abbildung von in einer Anlage ablaufenden Prozessen, erfolgen. Ein Simulationstool ist beispielsweise bekannt unter der Bezeichnung SIMIT der Siemens AG.

Auch, um Beschränkungen zu vermeiden, wenn automatisierte Anlagen getestet werden, kann eine Emulation bzw. Simulation zumindest bestimmter Anteile der Anlagen und zugehörigen Steuerung(en) durchgeführt werden.

Hierbei erfolgt insbesondere eine Simulation der Steuerung(en), der Feldgeräte und der ablaufenden Prozesse.

Es ist auch denkbar, ein Kommunikationsnetzwerk für eine Anlage, welches insbesondere in Form eines Feldbusses vorliegen kann, zu simulieren. Dabei sollte vorteilhafterweise das simulierte Kommunikationsnetzwerk funktional identisch zu dem realen Kommunikationsnetzwerk für die Anlage sein.

Aus der Publikation "Hardware-in-the-Loop-Simulation fertigungstechnischer Anlagen" von W. Riediger, P. Puntel Schmidt, F. Köslin und T. Schulte, Proceedings of the SPS/IPC/DRIVES: Internationale Fachmesse und Kongress: Elektrische Automatisierung - Systeme und Komponenten, Nürnberg: Apprimus-Verlag, 2014, geht die Simulation eines Kommunikationsnetzwerkes für eine Anlage im Kontext einer virtuellen Inbetriebnahme vor.

Wenn eine betriebsbegleitende Simulation erfolgt, ist jedoch wenigstens eine simulierte bzw. virtuelle Steuerung in der Regel mit dem realen Kommunikationsnetzwerk für die reale Anlage gekoppelt, damit diese Zugriff auf die Informationen des realen Kommunikationsnetzwerkes erhält.

Dies erlaubt es, das exakte Verhalten der realen Anlage und den exakten Anlagenzustand ("I/O dump" bzw. das vollständige Prozessabbild mit Prozessabbild der Eingänge (PAE) und Prozessabbild der Ausgänge (PAA)) in der simulierten insbesondere speicherprogrammierbaren Steuerung nachzubilden.

Wird in diesem Szenario auch das Kommunikationsnetzwerk simuliert, bilden das simulierte und das reale Kommunikationsnetzwerk ein (physisches) Netzwerk.

Bei der Kopplung eines simulierten mit einem realen Kommunikationsnetzwerk in einem einzigen Netzwerk sind nach Auffassung der Anmelderin jedoch Probleme zu erwarten.

Insbesondere gibt es bisher keine Möglichkeit, ein reales Kommunikationsnetzwerk mit einem simulierten Kommunikationsnetzwerk zu koppeln, wenn letzteres die gleichen technologischen Charakteristiken wie das reale Kommunikationsnetzwerk aufweist, ohne dass es dabei zu Datentelegramm-Kollisionen und/oder zusätzlicher Verkehrsauslastung (engl.: "traffic load") durch simulierte Telegramme kommt.

Die Anmelderin geht davon aus, dass solche Datentelegrammkollisionen zu erheblichen Problemen in der realen Anlagen führen, da simulierte Daten-, insbesondere Feldbus-Telegramme, mit realen Daten-, insbesondere Feldbus-Telegrammen, wechselwirken bzw. diese behindern können, und es zu einem unbeabsichtigten/unerwünschten Verhalten in der realen Anlage und einer oder mehreren vorhandenen realen insbesondere speicherprogrammierbaren Steuerung(en) kommen kann.

Vorbekannte Lösungen simulierter speicherprogrammierbare Steuerungen, beispielsweise ELCSIM bzw. PLCSIM Advance der Siemens AG, bieten bisher keine Möglichkeit der Simulation eines Kommunikationsnetzwerkes, insbesondere Feldbusses, wobei dies eine Designentscheidung ist, da die Simulationen der Steuerungen kein zugesichertes Zeitverhalten besitzen. So ist sichergestellt, dass jegliche Beeinflussung/Interaktion mit der realen Anlage über den realen Feldbus ausgeschlossen ist.

Es ist prinzipiell denkbar, Port-Replikatoren, beispielsweise sogenannte "Traffic Access Points" (TAP), zu verwenden, um Aufschlüsse über das Verhalten eines Kommunikationsnetzwerkes zu erhalten. Hierüber ist allerdings nur ein "Mithören" möglich. Es besteht keine Möglichkeit eines Feedbacks in das Quellnetzwerk, das repliziert wird. Auch könnte hierüber nicht die große Flexibilität erzielt werden, die Simulationen bieten. Beispielsweise bestünde keine Möglichkeit, Veränderungen testweise durchzuführen und das resultierende Verhalten vorab und sicher in der Simulationsumgebung zu beobachten.

Insbesondere, um ein umfassendes Bild des kompletten Anlagenverhaltens und eine hohe Flexibilität zu erhalten, wäre es sehr interessant, auch das Kommunikationsnetzwerk einer Anlage simulieren zu können, ohne dabei mit den vorstehenden Problemen konfrontiert zu sein.

Es ist daher eine Aufgabe der vorliegenden Erfindung, ein Verfahren der eingangs genannten Art zu schaffen, welches eine besonders umfassende Simulation einer Anlage ermöglicht, wobei gleichzeitig die vorstehenden Nachteile vermieden werden. Darüber hinaus ist es eine Aufgabe der vorliegenden Erfindung, ein System zur Durchführung eines solchen Verfahrens anzugeben.

Diese Aufgabe wird bei einem Verfahren der eingangsgenannten Art dadurch gelöst, dass im Rahmen der Simulation das Verhalten des realen Kommunikationsnetzwerkes durch ein simuliertes Kommunikationsnetzwerk abgebildet wird, wobei das reale Kommunikationsnetzwerk und das simulierte Kommunikationsnetzwerk gekoppelt sind und ein Netzwerk bilden, und wobei in dem simulierten Kommunikationsnetzwerk Simulations-Datentelegramme entstehen, die neben Nutzdaten jeweils eine Typangabe, insbesondere in einem Header des jeweiligen Simulations-Datentelegramms, umfassen, und wobei für Simulations-Datentelegrammen eine andere Typenangabe vorgesehen ist als für von realen Feldgeräten oder einer realen Steuerung stammende Real-Datentelegramme.

Die vorliegende Erfindung sieht mit anderen Worten vor, im Rahmen der Simulation einer technischen Anlage auch das Kommunikationsnetzwerk, über welches die Steuerung(en) und Feldgeräte kommunizieren, zu simulieren, und die Datentelegramme, die im Rahmen der Simulation des Netzwerkes entstehen, gezielt (minimal) anders zu gestalten als diejenigen Datentelegramme, die ihren Ursprung im realen Kommunikationsnetzwerk bzw. der zu simulierenden realen Anlage haben.

Das simulierte Kommunikationsnetzwerk ist bevorzugt funktional identisch zu dem realen Kommunikationsnetzwerk. Im Rahmen der Simulation wird das reale Kommunikationsnetzwerk abgebildet und es entstehen simulierte Datentelegramme.

Da erfindungsgemäß auch das Kommunikationsnetzwerk simuliert wird, kann u.a. untersucht werden, wie das Timing in diesem aussieht bzw., wie es in bestimmten Situation beeinflusst wird. Im Ergebnis kann eine besonders umfassende und besonders realitätsnahe Simulation erfolgen. Eine Simulation auch des Kommunikationsnetzwerkes ist besonders vorteilhaft, wenn systemdynamische Tests durchgeführt werden sollen.

Telegramme, welche im Rahmen der Netzwerk-Simulation entstehen bzw. erzeugt werden, werden als Simulations-Datentelegramme bezeichnet und Telegramme, die in der realen Anlage bzw. zugehörigen Steuerung(en) entstehen, etwa von einer Steuerung oder einem Feldgerät der realen Anlage stammen, werden als Real-Datentelegramme bezeichnet. Die (minimale) Unterscheidung ist gemäß der vorliegenden Erfindung dadurch gegeben, dass für Simulations-Datentelegramme eine andere Typenangabe, also ein anderer Typ vorgesehen ist als für Real-Datentelegramme.

Bevorzugt gilt, dass in den Simulations- und den Real-Datentelegrammen jeweils an der gleichen Stelle ein Feld für eine Typenangabe vorgesehen ist, und sich der Inhalt des Feldes für die Typenangabe der Simulations-Datentelegramme von dem Inhalt des Feldes für die Typenangabe der Real-Datentelegramme unterscheidet.

Eine Typenangabe befindet sich in der Regel in einem dem Nutzdateninhalt (engl. "payload") eines Telegramms vorangestellten Header, wobei dies jedoch nicht einschränkend zu verstehen, also auch nicht ausgeschlossen ist, dass eine Typenangabe in Telegrammen hinter dem Nutzdatenbereich aufgeführt ist.

Besonders bevorzugt handelt es sich bei der Typenangabe, die sich erfindungsgemäß unterscheidet, um den Ethertype (siehe IEEE 802.3).

Eine bevorzugte Ausgestaltung des erfindungsgemäßen Verfahrens zeichnet sich entsprechende dadurch aus, dass die Real-Datentelegramme und die Simulations-Datentelegramme jeweils die Angabe eines Ethertypes als Typangabe umfassen, und sich der Ethertype von Real-Datentelegramme von dem Ethertype von Simulations-Datentelegrammen unterscheidet. Gemäß dem Ethernet-Protokoll beispielsweise befindet sich der Ethertype im Header jeden Telegrammes, insbesondere unmittelbar vor dem Nutzdatenbereich und weist in der Regel eine Größe von 2 Byte auf.

Durch die erfindungsgemäß unterschiedliche Typenangabe wird es möglich, eine negative Rückkopplung auf Komponenten der realen Anlage durch Telegramme, die aus der Simulation des Kommunikationsnetzwerkes stammen, zuverlässig zu vermeiden. Geräte erkennen in der Regel an dem Typ, insbesondere dem Ethertype, ob ein bei ihnen ankommendes Datenpaket für sie bestimmt ist oder nicht. Von der Typenangabe hängt daher in der Regel ab, ob ein ankommendes Datenpaket von einem Gerät weiterverarbeitet wird oder nicht.

Wird für die bei der Simulation entstehenden Telegramme gezielt ein anderer Typ verwendet, kann erreicht werden, dass beispielsweise ein reales Feldgerät nicht unerwünscht Steuerbefehle erhält und ausführt, die aus der betriebsbegleitenden Simulation stammen und nicht für den realen Betrieb bestimmt sind.

Dabei ist mit dieser zuverlässigen Vermeidung einer unerwünschten Beeinflussung erfindungsgemäß nur eine sehr geringer Aufwand verbunden. Insbesondere ist keinerlei Änderung an den Anlagengeräten erforderlich. Es kann ausgehend davon, welcher Typ, insbesondere Ethertype, im Rahmend des Protokolls eines insbesondere bereits bestehenden realen Kommunikationsnetzwerkes vorgesehen ist, im Rahmen der Simulation für die dabei generierten Telegramme ein anderer Typ gewählt bzw. verwendet werden.

Die erfindungsgemäße Vorgehensweise bietet mehrere Vorteile. Einerseits ist es möglich, verschiedene Anwendungsfälle, wie etwa Regressionstests durchzuführen, ohne das Automatisierungssystem ändern zu müssen. Auch kann eine erhöhte Engineering-Effizienz erzielt werden, wenn Anlagen in Betrieb genommen werden. Weiterhin können im Vergleich zum Stand der Technik mehr Original-Implementierungen bzw. -Lösungen verwendet werden, da keine, auch nicht minimale, Anpassung hinsichtlich des Steuerungsprogramms, Artefakte eben dessen, Konfigurationen und Einstellungen jeglicher Art in einer simulierten insbesondere speicherprogrammierbaren Steuerung vorgenommen werden müssen. Auch können zusätzliche Kommunikationsnetzwerk-, insbesondre Feldbus-Layer, wie etwa PROFISAVE oder PROFIDRIVE, die auf Ethernet-basierten Feldbusprotokollen basiert sind, ohne weitere Änderungen verwendet werden, da das darunterliegende Protokoll, insbesondere Feldbusprotokoll, durch Anpassung insbesondere des Ethertypes minimalinvasiv verändert wird, ohne die Charakteristik des Kommunikationsnetzwerkes, insbesondere Feldbusses, an sich zu verändern.

Es kann sein, dass die Real-Datentelegramme und die Simulations-Datentelegramme neben der Typangabe, insbesondere dem Ethertyp, und dem Nutzdateninhalt noch weitere Angaben insbesondere zu Adressierungs- und/oder Verwaltungszwecken umfassen. Solche können sich ebenfalls im Header befinden, wobei dies auch hier nicht einschränkend zu verstehen ist. Bei den weiteren Angaben kann es sich beispielsweise um eine designierte Adresse (DA) und/oder eine Quelladresse (SA), eine Starterkennung (start frame delimiter, SFD) und/oder eine Präambel (PRE) handeln, wie es beispielsweise für Ethernet bekannt ist. Umfassen die Real-Datentelegramme und die Simulations-Datentelegramme neben dem Nutzdatenbereich und der Typangabe weitere Angaben, beispielsweise der vorgenannten Art, ist bevorzugt vorgesehen, dass die Real-Datentelegramme und die Simulations-Datentelegramme in einigen oder sämtlichen weiteren Angaben übereinstimmen. Insbesondere können sich die Real- und Simulations-Datentelegramme mit Ausnahmen der Typenangabe, insbesondere mit Ausnahme der Ethertypes, durch identische Header auszeichnen.

Dem Nutzdatenbereich nachgestellt kann in an sich bekannter Weise ferner eine Blockprüfzeichenfolge (Frame Check Sequence (FCS)) sein. Dabei ist zu beachten, dass sich aufgrund des veränderten Ethertypes - im Vergleich zu einem Original-Telegramm aus dem realen Netzwerk, insbesondere Feldbus, - eine unterschiedliche Prüfsumme ergeben wird bzw. würde. Bevorzugt kann vorgesehen sein, dass die im Feld für die FCS hinterlegte Prüfsumme, insbesondere CRC Prüfsumme, entweder immer aus dem jeweiligen Telegramm an sich generiert wird (unter Akzeptanz einer dann veränderten Prüfsumme bei den Simulations-Datentelegrammen), oder aber die Prüfsumme mit der Original-Typenangabe, also derjenigen, die für Real-Datentelegramme vorgesehen ist, insbesondere mit dem Original-Profinet-Ethertype, berechnet, dies auch bei Simulations-Datentelegrammen. In beiden Fällen kann dann eine entsprechende Funktion vorgesehen sein.

Eine weitere Ausführungsform des erfindungsgemäßen Verfahrens zeichnet sich dadurch aus, dass die Simulation der Anlage einschließlich der Simulation des Kommunikationsnetzwerks auf Hardware durchgeführt wird, die mit dem realen Kommunikationsnetzwerk der realen Anlage verbunden ist, so dass das simulierte und das reale Kommunikationsnetzwerk ein physisches Netzwerk darstellen.

Zweckmäßiger Weise ist vorgesehen, dass von den realen Feldgeräten nur Real-Datentelegramme verarbeitet werden.

Im Rahmen der Simulation der Anlage kann weiterhin das Verhalten der Feldgeräte durch simulierte Feldgeräte abgebildet werden.

Dann kann vorgesehen sein, dass von simulierten Feldgeräten nur Simulations-Datentelegramme verarbeitet werden.

Des Weiteren kann wenigstens eine physische insbesondere speicherprogrammierbare Steuerung vorgesehen sein. Dann werden von der wenigstens einen physischen Steuerung bevorzugt nur Real-Datentelegramme verarbeitet.

Alternativ oder zusätzlich kann wenigstens eine simulierte insbesondere speicherprogrammierbare Steuerung vorgesehen sein. Diese kann dann insbesondere wenigstens eine reale Steuerung für die Anlage abbilden.

Ist wenigstens eine simulierte Steuerung vorgesehen, kann diese auf Hardware wenigstens einer realen Steuerung ausgeführt werden.

Als ein Beispiel für eine reale bzw. physischen speicherprogrammierbare Steuerung, auf deren Hardware eine simulierte Steuerung "mitlaufen" kann, sei das Modell SIMATIC S7 der Siemens AG genannt.

Läuft die Simulation direkt auf der insbesondere speicherprogrammierbaren Steuerung mit, so dient die insbesondere speicherprogrammierbare Steuerung als sogenannte "multifunktionale Plattform".

Weiterhin kann vorgesehen sein, dass von der wenigstens einen simulierten Steuerung nur Simulations-Datentelegramme verarbeitet werden, oder dass von der wenigstens einen simulierten Steuerung sowohl Simulations-Datentelegramme als auch Real-Datentelegramme verarbeitet werden.

Eine weitere besonders bevorzugte Ausführungsform zeichnet sich dadurch aus, dass das reale Kommunikationsnetzwerk und das simulierte Kommunikationsnetzwerk über ein Kopplungs-Gerät, insbesondere in Form eines Switches oder einer Bridge, miteinander verbunden sind.

Es kann beispielsweise der Fall sein, dass Simulations-Hardware, auf welcher eine Anlagensimulation oder auch nur die Simulation des Kommunikationsnetzwerkes einer solchen läuft, über ein Kopplungs-Gerät, mit dem realen Kommunikationsnetzwerk verbunden, insbesondere an das reale Kommunikationsnetzwerk angeschlossen ist. Das Kopplungs-Gerät weist dann insbesondere wenigstens zwei Ports auf, wobei ein Port mit der Simulations-Hardware (direkt oder auch indirekt) verbunden ist und ein weiterer Port in dem realen Kommunikationsnetzwerk liegt.

Es sind verschiedene Szenarien denkbar, wie ein Kopplungs-Gerät Telegramme, die aus dem realen Kommunikationsnetzwerk stammen, in das simulierter Netzwerk weiterleitet und umgekehrt.

Beispielsweise kann es sein, dass aus dem realen Kommunikationsnetzwerk an dem Kopplungs-Gerät ankommende Real-Datentelegramme unverändert in das simulierte Kommunikationsnetzwerk weitergeleitet werden.

Alternativ dazu kann vorgesehen sein, dass aus dem realen Kommunikationsnetzwerk ankommende Real-Datentelegramme von dem Kopplungs-Gerät in Simulations-Datentelegramme umgewandelt werden, indem die Typenangabe in ankommenden Real-Datentelegrammen in die Typenangabe für Simulations-Datentelegramme abgeändert wird, und so umgewandelte Datentelegramme in das simulierte Kommunikationsnetzwerk weitergeleitet werden.

Dann kann weiterhin vorgesehen ein, dass entweder sämtliche an dem Kopplungs-Gerät ankommende Real-Datentelegramme umgewandelt und in das simulierte Kommunikationsnetzwerk weitergeleitet werden, oder nur Real-Datentelegramme umgewandelt und in das simulierte Kommunikationsnetzwerk weitergeleitet werden, die für wenigstens eine reale Steuerung und/oder für ein reales Feldgerät bestimmt sind. Dies dient insbesondere dem Zweck, dass die Steuerung(en) mit Messdaten aus dem realen Prozess arbeiten kann bzw. können. Das Auswahlkriterium kann dabei die Quell- und/oder Zieladresse, insbesondere das Tupel aus Quelladresse (insbesondere des jeweiligen Feldgerätes, von dem Messdaten stammen) und Zieladresse (insbesondere die Adresse der Steuerung) im realen Kommunikationsnetzwerk sein. Dann bekommt eine simulierte Steuerung ebenfalls diejenigen Telegramme, die ein Feldgerät an eine reale Steuerung sendet. Im Falle von PROFINET beispielsweise sind die Feldgeräte immer genau einer Steuerung zugeordnet, so dass hier auch die Quelladresse des Feldgerätes ausreichen würde.

Weiterhin kann vorgesehen sein, dass aus dem simulierten Kommunikationsnetzwerk an dem Kopplungs-Gerät ankommende Simulations-Datentelegramme unverändert in das reale Kommunikationsnetzwerk weitergeleitet werden.

Alternativ dazu können aus dem simulierten Kommunikationsnetzwerk ankommende Simulations-Datentelegramme von dem Kopplungs-Gerät in Real-Datentelegramme umgewandelt werden, indem die Typenangabe aus ankommenden Simulations-Datentelegrammen in die Typenangabe für Real-Datentelegramme abgeändert wird. Die so umgewandelten Datentelegramme werden dann in das reale Kommunikationsnetzwerk weitergeleitet.

Dann können entweder sämtliche an dem Kopplungs-Gerät ankommende Simulations-Datentelegramme umgewandelt und in das reale Kommunikationsnetzwerk weitergeleitet werden, oder nur Simulations-Datentelegramme umgewandelt und in das reale Kommunikationsnetzwerk weitergeleitet werden, die für wenigstens eine simulierte Steuerung und/oder für ein simuliertes Feldgerät bestimmt sind.

Weiterhin ist es möglich, dass aus dem simulierten Kommunikationsnetzwerk an dem Gerät ankommende Simulations-Datentelegramme herausgefiltert werden, so dass diese nicht in das reale Kommunikationsnetzwerk gelangen.

Hierdurch kann eine zusätzliche Auslastung, also ein zusätzlicher "traffic load" des realen Kommunikationsnetzwerkes durch Telegramme aus der Simulation zuverlässig vermieden werden.

Welche Art der Weiterleitung bzw. Filterung besonders vorteilig ist, kann insbesondere von dem konkreten Anwendungsfall abhängen.

Eine unveränderte Weiterleitung in beide Richtungen, also eine unveränderte Weiterleitung von Simulations-Datentelegrammen in das reale Netzwerk und von Real-Datentelegrammen in das simulierte Netzwerk kann vorteilig sein, wenn bekannt ist, dass eine zusätzliche Auslastung durch simulierte Telegramme in dem realen Netz zu keinen Problemen führen wird, da genug Kapazität zur Verfügung steht, und sämtliche Geräte der realen Anlage dazu ausgebildet und/oder eingerichtet sind, ausschließlich bei ihnen ankommende Telegramme weiterzuverarbeiten, die sich durch den für Real-Datentelegramme vorgesehenen Typ, insbesondere Ethertype auszeichnen, und die Anlagensimulation, insbesondere die simulierten Feldgeräte ausschließlich Telegramme akzeptieren, die sich durch den für die Simulation vorgesehenen Typ, insbesondere Ethertype auszeichnen, und die wenigstens eine simulierte Steuerung Datentelegramme beiden Typs, insbesondere Ethertypes akzeptiert.

Ist hingegen bekannt, dass zusätzlicher "traffic load" durch simulierte Telegramme problematisch werden könnte, kann eine Umwandlung von Real- in Simulations-Datentelegrammen in Verbindung mit einer Filterung von Simulations-Datentelegrammen vorteilig sein. In diesem Szenario gelangen keinen Simulations-Datentelegramme in das reale Netzwerk und Telegramme, die aus der realen Anlage stammen, werden umgewandelt, um von der Simulation akzeptiert zu werden, also quasi "übersetzt".

Läuft die Simulation wenigstes einer Steuerung auf einer realen, physischen Steuerung mit, so werden bevorzugt von dem Kopplungs-Gerät aus dem realen Kommunikationsnetzwerk ankommende Real-Datentelegramme in Simulation-Datentelegramme umgewandelt und umgekehrt.

Dies ermöglicht ein "Hardware-in-the-Loop" Szenario, bei dem die physische, reale Steuerung die reale Anlage, insbesondere die realen Feldgeräte, über das reale Kommunikationsnetzwerk steuert, und die physische, reale Steuerung, konkret über die darauf laufende simulierte Steuerung, insbesondere SPS, auch zum Steuern der simulierten Anlage verwendet werden kann. Die Steuerung, insbesondere SPS agiert dann als eine multifunktionale Plattform (engl.: multifunctional platform). Dies ermöglicht es Änderungen in der realen, physischen Steuerung zu simulieren und insbesondere Regressionstest durchzuführen.

Eine weitere Ausführungsform zeichnet sich dadurch aus, dass die Steuerung der Anlage (ausschließlich) mittels wenigstens einer simulierten Steuerung erfolgt, wobei von der wenigstens einen simulierten Steuerung für die physischen Feldgeräte bestimmte Simulations-Datentelegramme abgesendet werden, die von dem Kopplungs-Gerät in Real-Datentelegramme umgewandelt und als Real-Datentelegramme zu den Feldgeräten weitergeleitet und von diesen verarbeitet werden, und/oder von den physischen Feldgeräten für die wenigstens eine simulierte Steuerung bestimmte Real-Datentelegramme abgesendet werden, die von dem Kopplungs-Gerät in Simulations-Datentelegramme umgewandelt und als Simulations-Datentelegramme zu der wenigstens einen simulierten Steuerung weitergeleitet und von dieser verarbeitet werden.

Eine solche Ausgestaltung ermöglicht insbesondere ein Szenario, bei dem eine simulierte Steuerung, insbesondere simulierte SPS, die reale Anlage über das simulierte Kommunikationsnetzwerk kontrolliert, während die simulierte Steuerung auch dazu verwendet werden kann, die simulierte Anlage über das simulierte Kommunikationsnetzwerk zu steuern.

Gegenstand der Erfindung ist weiterhin ein Gerät, insbesondere Switch oder Bridge, zur Durchführung des erfindungsgemäßen Verfahrens.

Das erfindungsgemäße Gerät ist insbesondere einerseits mit einem Simulationstool verbunden oder verbindbar und andererseits mit einem insbesondere Ethernet-basierten Kommunikationsnetzwerk für eine technische Anlage verbunden oder verbindbar ist, und ausgebildet und/oder eingerichtet, um eine Typenangabe in Datentelegrammen, die im Rahmen einer Simulation des Kommunikationsnetzwerkes entstehen, abzuändern, und die Datentelegramme mit abgeänderter Typenangabe in das Kommunikationsnetzwerk weiterzuleiten, und/oder um eine Typenangabe in Datentelegrammen, die aus dem Kommunikationsnetzwerk stammen abzuändern, und die Datentelegramme mit abgeänderter Typenangabe an das Simulationstool weiterzuleiten.

Darüber hinaus betrifft die Erfindung ein System für die Simulation des Betriebes einer technischen Anlage, umfassend ein Simulationstool für die Simulation einer technischen Anlage einschließlich eines insbesondere Ethernet-basierten Kommunikationsnetzwerkes einer solchen, sowie ein Gerät, insbesondere in Form eines Switches oder einer Bridge, welches einerseits mit dem Simulationstool verbunden oder verbindbar ist und andererseits mit dem insbesondere Ethernet-basierten Kommunikationsnetzwerk für eine technische Anlage verbunden oder verbindbar ist, und welches ausgebildet und/oder eingerichtet ist, um Datentelegramme, die im Rahmen einer Simulation des Kommunikationsnetzwerkes entstehen, unverändert in Richtung des Kommunikationsnetzwerkes weiterzuleiten, und/oder um eine Typenangabe in Datentelegrammen, die im Rahmen einer Simulation des Kommunikationsnetzwerkes entstehen, abzuändern, und die Datentelegramme mit abgeänderter Typenangabe in das Kommunikationsnetzwerk weiterzuleiten, und/oder um Datentelegramme, die aus dem Kommunikationsnetzwerk stammen unverändert an das Simulationstool weiterzuleiten, und/oder um eine Typenangabe in Datentelegramme, die aus dem Kommunikationsnetzwerk stammen abzuändern, und die Datentelegramme mit abgeänderter Typenangabe an das Simulationstool weiterzuleiten.

Ein erfindungsgemäßes System hat sich für die Durchführung des erfindungsgemäßen Verfahrens bewährt.

Das Simulationstool des erfindungsgemäßen Systems ist bevorzugt ausgestaltet und/oder eingerichtet, um - zusätzlich zu dem Kommunikationsnetzwerk - Feldgeräte einer technischen Anlage und/oder wenigstens eine insbesondere speicherprogrammierbare Steuerung für eine solche zu simulieren.

Das Simulationstool kann auf geeigneter Hardware laufen bzw. solche umfassen. Das Gerät ist dann bevorzugt mit der Hardware verbunden oder verbindbar. Das Gerät kann in an sich bekannter Weise zwei oder mehr Ports aufweisen, um mit dem Simulationstool einerseits und dem Kommunikationsnetzwerk andererseits verbunden oder verbindbar zu sein.

Weiterhin ist Gegenstand der Erfindung ein Computerprogramm umfassend Programmcode-Mittel zur Durchführung des erfindungsgemäßen Verfahren zur Simulation des Betriebes einer technischen Anlage, insbesondere bei Ablauf auf einem erfindungsgemäßen System.

Schließlich betrifft die Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung. Darin ist
- FIG 1: eine rein schematische Darstellung einer realen Anlage und SPS sowie einer zugehörigen Anlagensimulation;
- FIG 2: eine rein schematische Darstellung, in welcher ein Real- und ein Simulations-Datentelegramm gegenübergestellt sind;
- FIG 3: eine rein schematische Darstellung einer realen Anlage und SPS sowie zugehörigen Simulation, wobei das Kopplungs-Gerät Real- und Simulations-Datentelegramme jeweils unverändert weiterleitet;
- FIG 4: eine vergrößerte, rein schematische Darstellung des Kopplungs-Gerätes aus FIG 3;
- FIG 5: eine vergrößerte, rein schematische Darstellung von einem realen Feldgerät oder einer realen SPS, welche nur Real-Datentelegramme akzeptiert;
- FIG 6: eine rein schematische Darstellung einer realen Anlage und SPS sowie zugehörigen Simulation, wobei das Kopplungsgerät ankommende Real-Datentelegramme in Simulations-Datentelegramme umwandelt und ankommende Simulations-Datentelegramme herausfiltert;
- FIG 7: eine vergrößerte, rein schematische Darstellung des Kopplungs-Gerätes aus FIG 6;
- FIG 8: eine rein schematische Darstellung einer realen Anlage und SPS sowie zugehörigen Simulation, wobei das Kopplungs-Gerät ankommende Real-Datentelegramme in Simulations-Datentelegramme umwandelt und umgekehrt, und wobei eine Simulation für die SPS auf der realen SPS läuft; und
- FIG 9: eine rein schematische Darstellung einer realen Anlage sowie zugehörigen Simulation, wobei die reale Anlage von der simulierten SPS gesteuert wird und das Kopplungsgerät ankommende Simulations-Datentelegramme in Real-Datentelegramme umwandelt und umgekehrt.

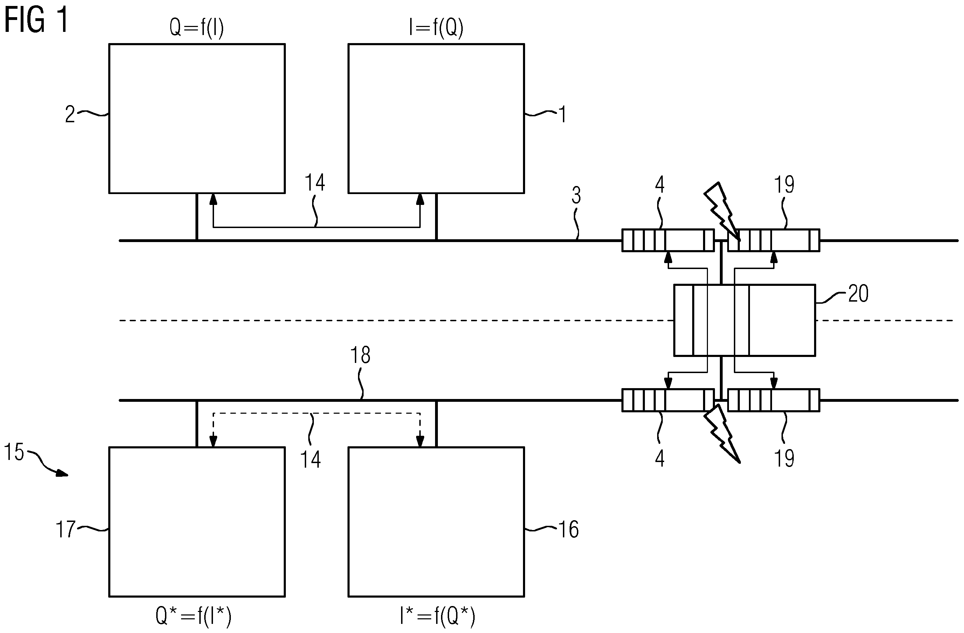

Die FIG 1 zeigt in schematischer Blockbilddarstellung eine technische Anlage 1 der Automatisierungstechnik, die eine Vielzahl von in der Figur nicht erkennbaren Feldgeräten aufweist, die Sensoren und/oder Aktoren umfassen, mittels denen ein in der Anlage 1 ablaufender, ebenfalls nicht erkennbarer Prozess beobachtet und auf diesen eingewirkt wird.

Die Feldgeräte der Anlage 1 sind mit einer Steuerung verbunden, die vorliegend durch eine speicherprogrammierbare Steuerung 2 (SPS) gegeben ist.

In aus dem Stand der Technik hinlänglich bekannter Weise werden im Betrieb der Anlage 1 Messdaten, die mittels Sensoren prozessnah erfasst wurden, an die SPS 2 gesendet. Die SPS 2 ermittelt unter Berücksichtigung der erfassten Messdaten Stellwerte für die Aktoren, und die Stellwerte werden von der SPS 2 zu Feldgeräten gesendet, die auf in der Anlage 1 ablaufende Prozesse einwirken.

Für die Kommunikation zwischen der SPS 2 und den Feldgeräten der Anlage 1 ist ein Ethernet-basiertes Kommunikationsnetzwerk, konkret ein Ethernet-basierter Feldbus 3 vorgesehen. Vorliegend handelt es sich um einen PROFINET-Feldbus 3.

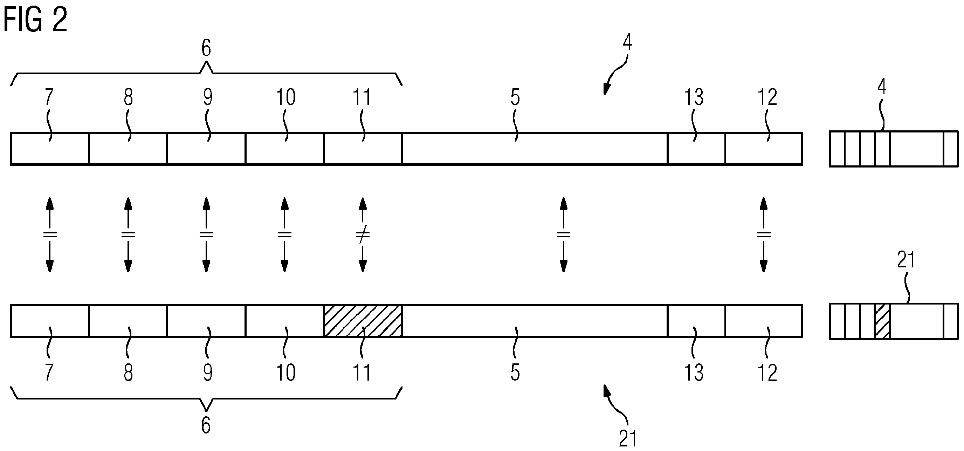

Für den Datenaustausch zwischen SPS 2 und Feldgeräten werden Datentelegramme 4 (siehe FIG 2 oben) gesendet, die neben dem eigentlichen Nutzdatenbereich 5 (engl. "payload") Angaben zu Adressierungs- und/oder Verwaltungszwecken umfassen. Vorliegend sind die Angaben in dem Header 6 der Datentelegramme 4 enthalten, und durch eine 7 Byte große Präambel 7, eine 1 Byte große SFD 8, eine 6 Byte große designierte Adresse 9 (DA), eine 6 Byte große Quelladresse 10 (SA), und eine 2 Byte große Typenangabe 11, bei der es sich vorliegend um den Ethertype handelt, gegeben. Dem Header 6 folgend ist der Nutzdateninhalt 5 (engl. "payload") und am Ende eine Blockprüfsumme 12 (FCS) enthalten. Der Nutzdatenbereich 5 umfasst noch ein PAD-Feld 13 zum Erreichen der Minimallänge.

In der FIG 1 ist der Datenaustausch zwischen SPS 2 und den Feldgeräten der Anlage 1 auch durch einen Doppelpfeil 14 angedeutet.

Unterhalb der realen Anlage 1 und der realen SPS 2 und dem realen Feldbus 3, und von diesen durch eine horizontale gestrichelte Linie separiert, ist - ebenfalls rein schematisch - ein digitaler Zwilling 15, also eine zugehörige Simulation 15 gezeigt, die betriebsbegleitend auf in der Figur nicht dargestellter Hardware durchgeführt wird.

Der digitale Zwilling 15 umfasst eine simulierte Anlage 16, welche die Funktion der realen Anlage 1 einschließlich deren Feldgeräte und der ablaufenden Prozesse abbildet, sowie eine simulierte SPS 17, welche die Funktion der realen SPS 2 abbildet. In der FIG 1 ist dies auch über mathematische Funktionen angedeutet. Dabei ist der realen SPS 2 die Funktion Q = f(I) und der realen Anlage 1 die Funktion I = f(Q) zugeordnet, und der simulierten Anlage 16 entsprechend die Funktion I* = f(Q*) und der simulierten SPS 17 die Funktion Q* = f(I*).

Um über den digitalen Zwilling 15 eine besonders umfassende Abbildung zu erzielen, die so nah wie möglich an der Realität ist, wäre es vorteilhaft, wenn zusätzlich der reale Feldbus 3 durch einen simulierten Feldbus 18 simuliert werden könnte.

Dabei sollte der simulierte Feldbus 18 funktional identisch zu dem realen Feldbus 3 sein.

Dabei ist jedoch zu beachten, dass die simulierte SPS 17 mit dem realen Feldbus 3 gekoppelt sein muss, um Zugriff auf die Informationen des realen Feldbusses 3 zu erhalten.

Wird der reale Feldbus 3 durch einen simulierten Feldbus 18 simuliert, bilden realer Feldbus 3 und simulierter Feldbus 18 ein Netzwerk, wie in FIG 1 dargestellt. Dann können Datentelegramme 19, die im Rahmen der Simulation 15 entstehen, beispielsweise über einen den realen 3 und simulierten Feldbus 18 verbindenden Switch 20 in den realen Feldbus 3 gelangen und umgekehrt.

Die dadurch bedingte höhere "traffic load" im realen Feldbus 3 und mögliche Telegramm-Kollisionen stellen dann ein Problem dar. Simulierte Feldbus-Telegramme können mit realen Feldbus-Telegrammen wechselwirken bzw. diese behindern, und es kann zu einem unbeabsichtigten/unerwünschten Verhalten in der realen Anlage 1 und der realen SPS 2 kommen. Die Problematik von Störungen im Netz, insbesondere Datentelegramm-Kollisionen ist in der FIG 1 durch Blitze dargestellt.

Dieses Problem kann durch Ausführungsbeispiele des erfindungsgemäßen Verfahrens zur Simulation des Betriebes einer technischen Anlage zuverlässig vermieden werden.

Dabei wird konkret das Verhalten des realen Feldbusses 3 durch einen simulierten Feldbus 18 abgebildet, wobei der reale Feldbus 3 und der simulierte Feldbus 18 gekoppelt sind und ein Netzwerk bilden, wie es in FIG 1 dargestellt ist.

Es sei angemerkt, dass allein aus Gründen der Veranschaulichung in der FIG 1 und den Figuren 3, 6, 8 und 9 die grafische Darstellung des simulierten Feldbusses 18 analog zu der grafischen Darstellung des realen Feldbusses 3 gewählt ist.

Im Rahmen der Abbildung des Feldbusses 3, insbesondere in dem simulierten Feldbus 18 entstehen dabei Simulations-Datentelegramme 21, die - in völliger Analogie zu den Telegrammen 4 aus dem realen Feldbus - jeweils neben Nutzdaten 5 eine Typangabe in Form eines Ethertypes 11 in ihrem Header 6 umfassen.

Im Rahmen der Abbildung des Feldbusses 3, insbesondere in dem simulierten Feldbus 18 entstehen dabei Simulations-Datentelegramme 21, die - in völliger Analogie zu den Telegrammen 4 aus dem realen Feldbus - jeweils neben Nutzdaten 5 eine Typangabe in Form eines Ethertypes 11 in ihrem Header 6 umfassen.

Im Zusammenhang mit der Simulation des Kommunikationsnetzwerkes, insbesondere Feldbusses, für eine Anlage sei auch auf die Publikation "Hardware-in-the-Loop-Simulation fertigungstechnischer Anlagen" von W. Riediger, P. Puntel Schmidt, F. Köslin und T. Schulte, Proceedings of the SPS/IPC/DRIVES: Internationale Fachmesse und Kongress: Elektrische Automatisierung - Systeme und Komponenten, Nürnberg: Apprimus-Verlag, 2014 verwiesen.

Dabei ist erfindungsgemäß für die im Rahmen der Simulation 15 entstehenden Simulations-Datentelegramme 21 ein anderer Ethertype 11 vorgesehen als für die von realen Feldgeräten oder der realen Steuerung 2 stammende Real-Datentelegramme 4.

In FIG 2 unten ist ein Simulations-Datentelegramm 21 beispielhaft - in vergrößerter (links) und kleinerer Darstellung (rechts) - gezeigt.

Zur Verdeutlichung, dass sich die im Rahmen der Simulation 15 entstehenden Simulations-Datentelegramme 21 durch einen anderen Ethertype 11 auszeichnen, ist das zugehörige Feld in dem Simulations-Datentelegramm 21 schraffiert dargestellt.

Weitere Veränderungen der Simulations-Datentelegramme 21 im Vergleich zu den Real -Datentelegrammen 4 liegen nicht vor. In allen anderen Aspekten stimmen die Simulations-Datentelegramme 21 also mit den Real-Datentelegrammen 4 überein. In der FIG 2 ist dies durch "=" bzw. "≠"-Zeichen dargestellt.

Es sei angemerkt, dass eine mögliche, wenngleich nicht erforderliche Ausnahme hiervon bezüglich der im FCS Sektor befindliche CRC-Prüfsumme bestehen kann. Diese kann optional entweder derjenigen des Real-Datentelegramms 4 auch im Simulations-Datentelegramm 21 entsprechen, oder sich aus dem veränderten Simulations-Datentelegramm 21 spezifisch berechnen. Dies stellt insbesondere die einzige Ausnahme von der Regel dar, dass die Real- 4 und Simulations-Datentelegramme 21 - ausgenommen des Ethertypes 11 - übereinstimmen.

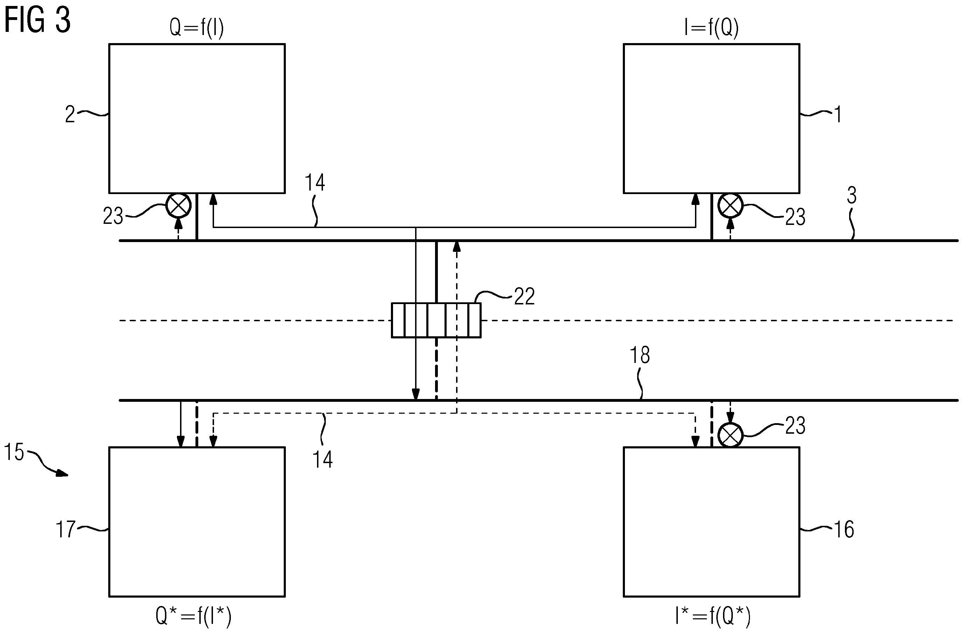

Ein erstes Ausführungsbeispiel des erfindungsgemäßen Verfahrens zeichnet sich weiterhin dadurch aus, dass aus dem realen Feldbus 3 stammende Real-Datentelegramme 4 unverändert in den simulierten Feldbus 18 weitergeleitet werden und umgekehrt, wie es in FIG 3 dargestellt ist.

Konkret ist der reale Feldbus 3 mit dem simulierten Feldbus 18 über ein Kopplungs-Gerät 22 in Form eines Switches verbunden (siehe FIG 3). Das Kopplungs-Gerät 22 weist hierzu zwei in den Figuren nicht erkennbar Ports auf.

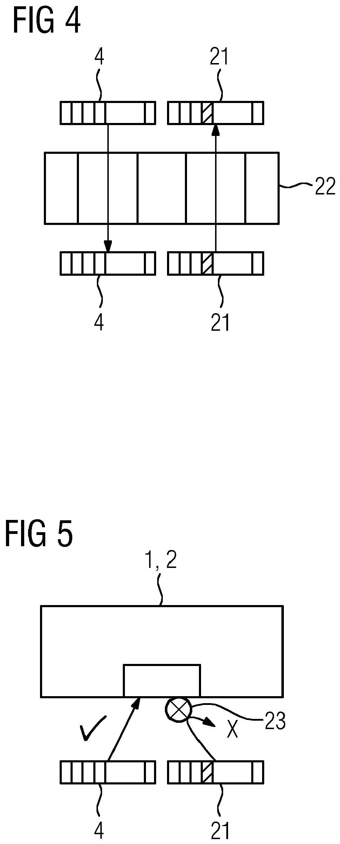

Das Kopplungs-Gerät 22 leitet sämtliche aus dem realen Feldbus 3 an diesem ankommende Real-Datentelegramme 4 unverändert in den simulierten Feldbus 318 und sämtliche aus dem simulierten Feldbus 18 an diesem ankommende Simulations-Datentelegramme 21 unverändert in den realen Feldbus 3 weiter. Die FIG 4 enthält hierzu eine vergrößerte Darstellung.

Das Kopplungs-Gerät 22 ist dafür entsprechend ausgebildet und eingerichtet.

Weiterhin werden bei diesem Ausführungsbeispiel von der realen SPS 2 und den realen Feldgeräten der realen Anlage 1 nur Real-Datentelegramme 4, jedoch keine Simulations-Datentelegramme 21 verarbeitet. Welche Telegramme für die realen Geräte bestimmt sind, erkennen diese dabei an dem Ethertype 11 in den Telegrammen. Die Simulations-Datentelegramme weisen einen für die realen Geräte "falschen" Ethertype auf, nämlich denjenigen, der erfindungsgemäß für die Simulations-Datentelegramme vorgesehen ist, weshalb sie von diesen nicht akzeptiert werden. In der FIG 3 ist dies dadurch angedeutet, dass gestrichelte Pfeile, welche für Simulations-Datentelegramme 21 stehen, auf ein Element 23 in Form eines Kreises mit einem Kreuz darin treffen. Dieser Sachverhalt ist in FIG 5 nochmals vergrößert dargestellt. Real-Datentelegramme sind in der FIG 3 und den noch folgenden Figuren durch Pfeile mit durchgezogener Linie repräsentiert.

Darüber hinaus werden von der simulierten Anlage 16, insbesondere den simulierten Feldgeräten dieser ausschließlich Simulations-Datentelegramme 21 und keine Real-Datentelegramme 4 akzeptiert.

Diese Ausgestaltung stellt sicher, dass kein unerwünschtes Verhalten von der realen Anlage 1 bzw. realen SPS 2 und auch nicht von der simulierten Anlage 16 bewirkt wird, weil diese unerwünscht Telegramme verarbeiten, welche nicht für diese bestimmt sind. Gleichzeitig wird ein erhöhtes Verkehrsaufkommen durch Simulations-Datentelegramme 21 im realen Feldbus 3 geduldet.

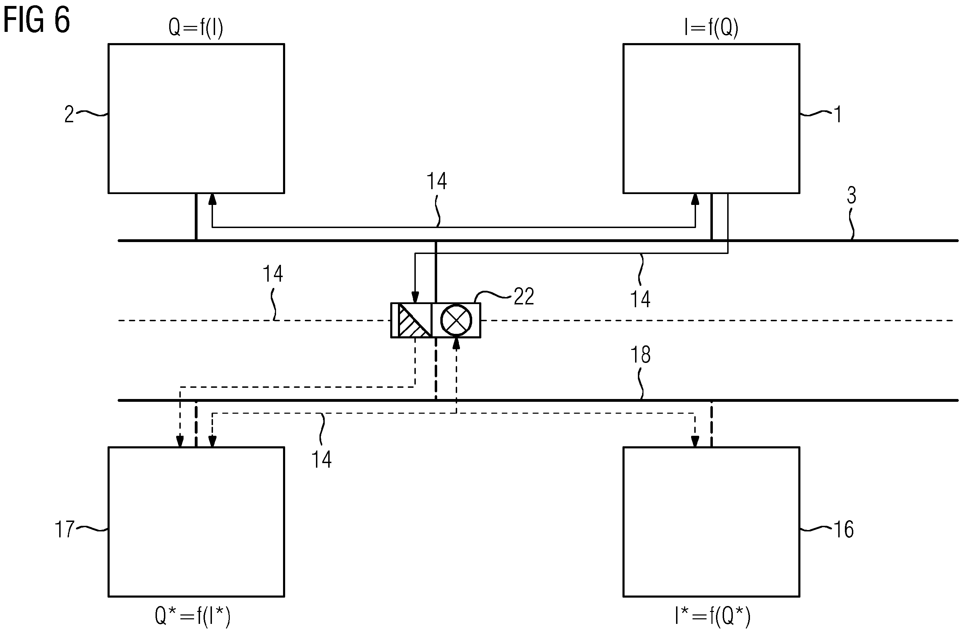

Ein zweites Ausführungsbeispiel des erfindungsgemäßen Verfahrens wird im Folgenden unter Bezugnahme auf FIG 6 erläutert. Diese Figur stimmt - mit Ausnahme der Ausgestaltung des Kopplungsgerätes 22, der fehlenden Elemente 23 und der zu den Simulations- 21 und Real-Datentelegrammen gehörigen Pfeile 14 - mit der FIG 3 überein und gleiche Komponenten sind mit gleichen Bezugszeichen versehen.

Bei dem zweiten Ausführungsbeispiel ist vorgesehen, dass aus dem realen Feldbus 3 ankommende Real-Datentelegramme 4 von dem Kopplungs-Gerät 22 in Simulations-Datentelegramme 21 umgewandelt werden, indem der Ethertype 11 in den Ethertype 11 für Simulations-Datentelegramme 21 abgeändert wird. Dabei werden nicht - wie bei dem ersten Ausführungsbeispiel - sämtliche ankommenden Real-Datentelegramme 4 durch Änderung des Ethertypes 11 umgewandelt, sondern nur diejenigen Real-Datentelegramme 4, welche für die reale SPS 2 bestimmt sind. Real-Datentelegramme 4, welche von dieser stammen und für reale Feldgerät bestimmt sind, werden nicht umgewandelt und weitergeleitet. Die Auswahl erfolgt dabei über die in den Real-Datentelegrammen 4 enthaltene Quelladresse 10 und optional zusätzlich die designierte Adresse 9, also die Zieladresse.

Die umgewandelte Datentelegramme 21 werden von dem Kopplungs-Gerät 22 in den simulierten Feldbus 18 weitergeleitet.

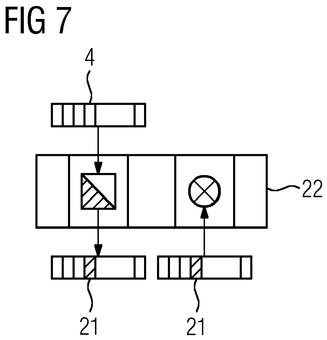

Es werden weiterhin aus dem simulierten Feldbus 18 an dem Kopplungs-Gerät 22 ankommende Simulations-Datentelegramme 21 herausgefiltert, so dass diese nicht in den realen Feldbus 3 gelangen. Dies ist in FIG 7 nochmals vergrößert dargestellt.

Das Kopplungs-Gerät 22 des zweiten Ausführungsbeispiels ist dafür entsprechend ausgebildet und eingerichtet.

Die simulierte SPS 17 akzeptiert nur Simulations-Datentelegramme 21 und sendet nur Simulations-Datentelegramme 21. Die simulierte Anlage 16 akzeptiert bzw. versteht nur Simulations-Datentelegramme 21.

Durch die Ausgestaltung gemäß FIG 6 wird es möglich, dass die simulierte SPS 17 Informationen aus dem realen Feldbus 3, insbesondere von den realen Feldgeräten der realen Anlage 1 erhält, was in der FIG 6 durch entsprechende Pfeile 14 angedeutet ist, und es wird gleichzeitig sichergestellt, dass kein zusätzlicher "traffic load" durch Telegramme im realen Feldbus 3 verursacht wird, die aufgrund der Simulation 15 entstehen.

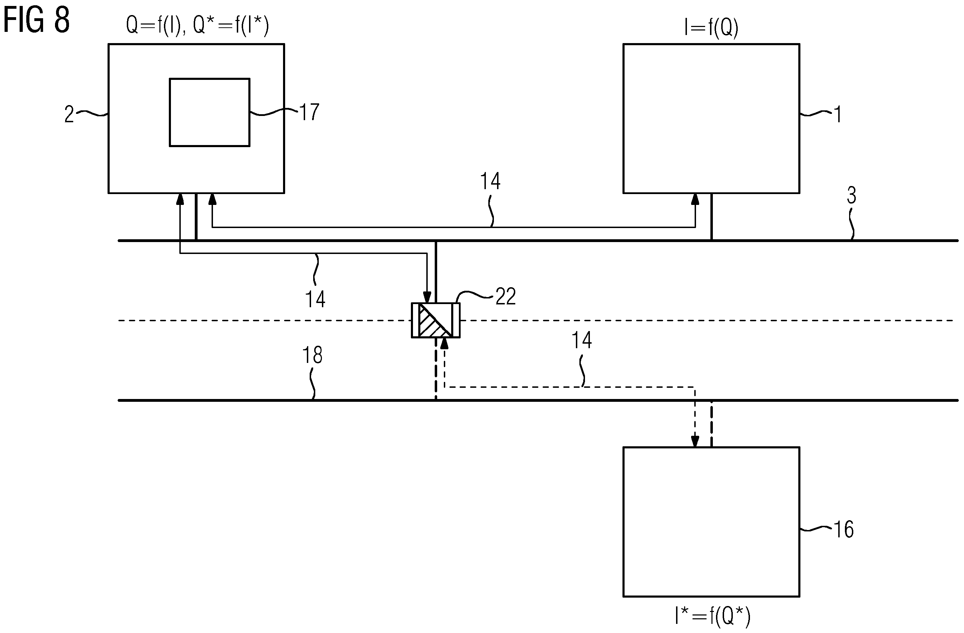

Ein drittes Ausführungsbeispiel wird unter Bezugnahme auf die FIG 8 beschrieben, wobei auch hier gleiche Komponenten mit gleichen Bezugsziffern versehen sind.

Bei diesem Ausführungsbeispiel wird die simulierte SPS 17 mit auf der Hardware der realen SPS 2 ausgeführt. Diese dient als multifunktionale Plattform.

Von dem Kopplungsgerät 22 werden ferner aus dem realen Feldbus 3 ankommende Real-Datentelegramme 4 in Simulations-Datentelegramme 21 umgewandelt, indem der Ethertype 11 in den für Simulations-Datentelegramme 21 vorgesehenen Ethertype 11 abgeändert wird, und so umgewandelte Datentelegramme werden in den simulierten Feldbus 18 weitergeleitet. Dabei werden nur Real-Datentelegramme 4 umgewandelt und weitergeleitet, welche von der realen SPS 2 stammen und für reale Feldgeräte bestimmt sind.

Darüber hinaus werden von dem Kopplungsgerät 22 aus dem simulierten Feldbus 18 ankommende Simulations-Datentelegramme 21 in Real-Datentelegramme 4 umgewandelt, indem der Ethertype 11 auf den für Real-Datentelegramme 4 vorgesehenen Ethertype 11 abgeändert wird, und die so umgewandelten Datentelegramme werden in den realen Feldbus 3 weitergeleitet. Simulations-Datentelegramme 4 aus dem simulierten Feldbus 18 stammen hier von der simulierten Anlage 16.

Das Kopplungs-Gerät 22 des dritten Ausführungsbeispiels ist dafür entsprechend ausgebildet und eingerichtet.

Die Ausgestaltung gemäß FIG 8 ermöglicht ein "Hardware-in-the-Loop"-Szenario, bei dem die reale, physisches SPS 2 die reale Anlage 1, insbesondere die realen Feldgeräte, über den realen Feldbus 3 steuert, und die physische SPS 2 auch zum Steuern der simulierten Anlage 16 über den realen Feldbus 3 verwendet werden kann. Die SPS 2 agiert dann als eine multifunktionale Plattform (engl.: multifunctional platform). Dies ermöglicht es, Änderungen in der realen, physischen SPS 2 zu simulieren und insbesondere Regressionstest unter realen Bedingungen durchzuführen.

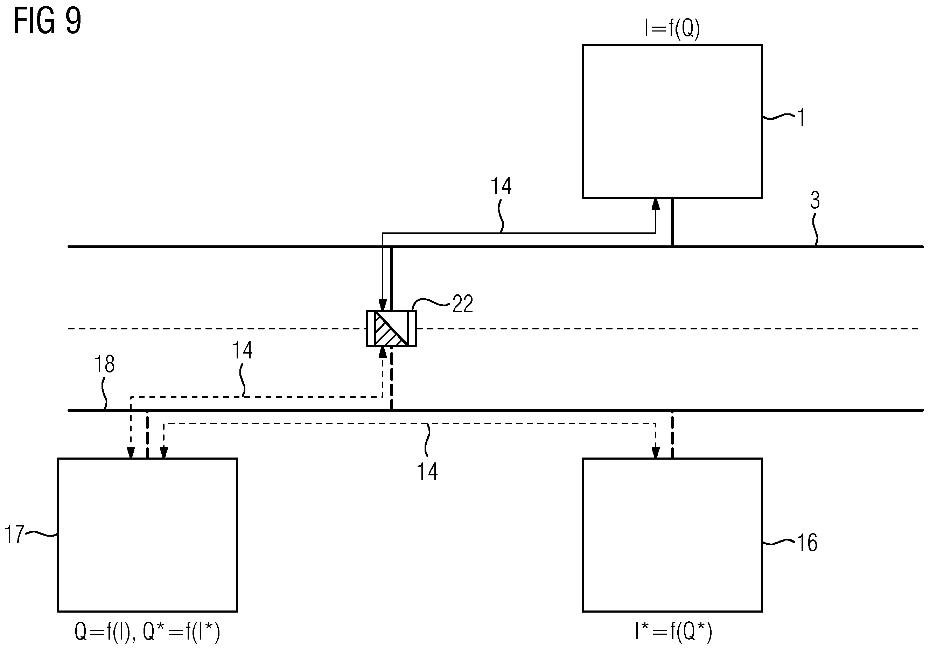

Ein viertes Ausführungsbeispiel wird unter Bezugnahme auf FIG 9 beschrieben, wobei wiederum gleiche Komponenten mit gleichen Bezugszeichen versehen sind.

Wie man erkennt, ist hier keine reale, physische SPS 2 vorgesehen, sondern ausschließlich eine simulierte SPS 17.

Von dem Kopplungs-Gerät 22 werden bei dem vierten Ausführungsbeispiel - genau wie bei dem dritten gemäß FIG 8 - aus dem realen Feldbus 3 ankommende Real-Datentelegramme 4 in Simulations-Datentelegramme 2 umgewandelt, indem der Ethertype 11 in den für Simulations-Datentelegramme 21 vorgesehenen Ethertype 11 abgeändert wird, und es werden aus dem simulierten Feldbus 18 ankommende Simulations-Datentelegramme 21 in Real-Datentelegramme 4 umgewandelt, indem der Ethertype 11 auf den für Real-Datentelegramme 4 vorgesehenen Ethertype 11 abgeändert wird, und die so umgewandelten Datentelegramme werden in den simulierten 21 bzw. den realen Feldbus 3 weitergeleitet.

Das Kopplungs-Gerät 22 ist - wie dasjenige aus FIG 8 - dafür entsprechend ausgebildet und eingerichtet.

Die Ausgestaltung gemäß FIG 9 ermöglicht ein Szenario, bei dem die simulierte SPS 17 die reale Anlage 1 über den simulierten Feldbus 21 steuert, während die simulierte SPS 17 auch dazu verwendet werden kann, die simulierte Anlage 16 über den simulierten Feldbus 18 zu steuern. Dies ermöglicht es im realen Betrieb der Anlage durch eine simulierte, ggf. rein virtuelle insbesondere speicherprogrammierbare Steuerung Produktionsprozesse auszuführen. Dies beispielsweise, um die in der insbesondere speicherprogrammierbaren Steuerung geänderte Software oder Konfiguration oder ähnliches direkt an der realen Anlage noch vor Einspielen in die reale Zielsteuerung bei beispielsweise Zeit- bzw. Echtzeit- bzw. Realzeitunkritischen Prozessen zu testen, oder um als Backup für die reale Zielsteuerung steuerungstechnische Aufgabe zu übernehmen oder weil sie sich die insbesondere speicherprogrammierbare Steuerung physisch nicht vor Ort an der Anlage befindet, sondern beispielsweise in einer sogenannten Cloud Applikation.

Die erfindungsgemäße Vorgehensweise bietet mehrere Vorteile. Einerseits ist es möglich, verschiedene Anwendungsfälle, wie etwa Regressionstests durchzuführen, ohne das Automatisierungssystem in seiner Konfiguration oder hinsichtlich der verwendeten Steuerungscodefragmente (Bausteine u.ä.) ändern zu müssen. Auch kann eine erhöhte Engineering Effizienz erzielt werden, wenn Anlagen in Betrieb genommen werden, da sich durch die beschriebene Vorgehensweise Änderungen stets an der realen Anlage über die Simulation testen lassen. Weiterhin können im Vergleich zum Stand der Technik mehr Original-Implementierungen bzw. -Lösungen verwendet werden, da keine, auch nicht minimale, Anpassung hinsichtlich des Steuerungsprogramms, Artefakte eben dessen, Konfigurationen und Einstellungen jeglicher Art in einer simulierten insbesondere speicherprogrammierbaren Steuerung vorgenommen werden müssen. Auch können zusätzliche Kommunikationsnetzwerk-, insbesondre Feldbus-Layer, wie etwa PROFISAVE oder PROFIDRIVE, die auf Ethernet-basierten Feldbusprotokollen basiert sind, ohne weitere Änderungen verwendet werden, da das darunterliegende Protokoll, insbesondere Feldbusprotokoll durch die Anpassung insbesondere des Ethertypes minimalinvasiv verändert wird, ohne die Charakteristik des Kommunikationsnetzwerkes, insbesondere Feldbusses, an sich zu verändern.

Es sei angemerkt, dass Ausführungsbeispiele des erfindungsgemäßen Systems jeweils durch ein Softwaretool für die Durchführung der vorstehenden Simulation 15 und ein Kopplungs-Gerät 22 gegeben sind. Ausführungsbeispiele eines erfindungsgemäßen Gerätes stellen die Kopplungs-Geräte 22 aus den Figuren dar.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Simulation einer technischen Anlage (1), die eine Mehrzahl von Feldgeräten umfasst, die mit wenigstens einer insbesondere speicherprogrammierbaren Steuerung (2) über ein bevorzugt Ethernet-basiertes Kommunikationsnetzwerk (3), insbesondere in Form eines Ethernet-basierten Feldbusses, verbunden sind, wobei im Betrieb der Anlage (1) über das Kommunikationsnetzwerk (3) Datentelegramme (4), die neben Nutzdaten (5) jeweils eine Typangabe (11), insbesondere in einem Header (6) des jeweiligen Datentelegramms (4), umfassen, zwischen den Feldgeräten und der wenigstens einen Steuerung (2) gesendet werden, und wobei parallel zu dem Betrieb der Anlage (1) eine Simulation (15) erfolgt,
**dadurch gekennzeichnet, dass** im Rahmen der Simulation (15) das Verhalten des realen Kommunikationsnetzwerkes (3) durch ein simuliertes Kommunikationsnetzwerk (18) abgebildet wird, wobei das reale Kommunikationsnetzwerk (3) und das simulierte Kommunikationsnetzwerk (18) gekoppelt sind und ein Netzwerk bilden, und wobei in dem simulierten Kommunikationsnetzwerk (18) Simulations-Datentelegramme (21) entstehen, die neben Nutzdaten (5) jeweils eine Typangabe (11), insbesondere in einem Header (6) des jeweiligen Simulations-Datentelegramms (21), umfassen, und wobei für Simulations-Datentelegrammen (21) eine andere Typenangabe (11) vorgesehen ist als für von realen Feldgeräten oder einer realen Steuerung (2) stammende Real-Datentelegramme (4).

2. Verfahren nach Anspruch 1,
**dadurch gekennzeichnet, dass** die Real-Datentelegramme (4) und die Simulations-Datentelegramme (21) jeweils die Angabe eines Ethertypes (11) als Typangabe umfassen, und sich der Ethertype (11) von Real-Datentelegramme (4) von dem Ethertype von Simulations-Datentelegrammen (21) unterscheidet.

3. Verfahren nach Anspruch 1 oder 2,
**dadurch gekennzeichnet, dass** die Real-Datentelegramme (4) und die Simulations-Datentelegramme (21) neben der Typ-Angabe (11) weitere Angaben (7, 8, 9, 10, 12) zu Adressierungs- und/oder Verwaltungszwecken, insbesondere jeweils in einem Header (6), umfassen, und die Real-Datentelegramme (4) und die Simulations-Datentelegramme (21) in den weiteren Angaben übereinstimmen.

4. Verfahren nach einem der vorhergehenden Ansprüche,
**dadurch gekennzeichnet, dass** die Simulation (15) auf Hardware durchgeführt wird, die mit dem realen Kommunikationsnetzwerk (3) verbundenen ist.

5. Verfahren nach einem der vorhergehenden Ansprüche,
**dadurch gekennzeichnet, dass** von realen Feldgeräten nur Real-Datentelegramme (4) verarbeitet werden.

6. Verfahren nach einem der vorhergehenden Ansprüche,
**dadurch gekennzeichnet, dass** wenigstens eine physische insbesondere speicherprogrammierbare Steuerung (2) vorgesehen ist und bevorzugt von der wenigstens einen physischen Steuerung (2) nur Real-Datentelegramme (4) verarbeitet werden.

7. Verfahren nach einem der vorhergehenden Ansprüche,
**dadurch gekennzeichnet, dass** im Rahmen der Simulation (15) der Anlage (1) das Verhalten der Feldgeräte durch simulierte Feldgeräte abgebildet wird, und insbesondere von simulierten Feldgeräten nur Simulations-Datentelegramme (21) verarbeitet werden.

8. Verfahren nach einem der vorhergehenden Ansprüche,
**dadurch gekennzeichnet, dass** wenigstens eine simulierte insbesondere speicherprogrammierbare Steuerung (17) vorgesehen ist, die insbesondere wenigstens eine reale Steuerung (2) der Anlage (1) abbildet, wobei die simulierte Steuerung (17) bevorzugt auf Hardware der realen Steuerung (2) ausgeführt wird.

9. Verfahren nach Anspruch 8,
**dadurch gekennzeichnet, dass** von der wenigstens einen simulierten Steuerung (17) nur Simulations-Datentelegramme (21) verarbeitet werden, oder von der wenigstens einen simulierten Steuerung (17) sowohl Simulations-Datentelegramme (21) als auch Real-Datentelegramme (4) verarbeitet werden.

10. Verfahren nach einem der vorhergehenden Ansprüche,
**dadurch gekennzeichnet, dass** das reale Kommunikationsnetzwerk (3) und das simulierte Kommunikationsnetzwerk (21) über ein Kopplungs-Gerät (22) insbesondere in Form eines Switches oder einer Bridge miteinander verbunden sind.

11. Verfahren nach Anspruch 10,
**dadurch gekennzeichnet, dass** aus dem realen Kommunikationsnetzwerk (3) an dem Kopplungs-Gerät (22) ankommende Real-Datentelegramme (4) unverändert in das simulierte Kommunikationsnetzwerk (18) weitergeleitet werden.

12. Verfahren nach Anspruch 10,
**dadurch gekennzeichnet, dass** aus dem realen Kommunikationsnetzwerk (3) ankommende Real-Datentelegramme (4) von dem Kopplungs-Gerät (22) in Simulations-Datentelegramme (21) umgewandelt werden, indem die Typenangabe (11) in ankommenden Real-Datentelegrammen (4) in die Typenangabe (11) für Simulations-Datentelegramme (21) abgeändert wird, und so umgewandelte Datentelegramme (21) in das simulierte Kommunikationsnetzwerk (18) weitergeleitet werden.

13. Verfahren nach Anspruch 12,
**dadurch gekennzeichnet, dass** entweder sämtliche an dem Kopplungs-Gerät (22) ankommende Real-Datentelegramme (4) umgewandelt und in das simulierte Kommunikationsnetzwerk (18) weitergeleitet werden, oder nur Real-Datentelegramme (4) umgewandelt und in das simulierte Kommunikationsnetzwerk (18) weitergeleitet werden, die für wenigstens eine reale Steuerung (2) und/oder für ein reales Feldgerät bestimmt sind.

14. Verfahren nach einem der Ansprüche 10 bis 13,
**dadurch gekennzeichnet, dass** aus dem simulierten Kommunikationsnetzwerk (18) an dem Kopplungs-Gerät (22) ankommende Simulations-Datentelegramme (21) unverändert in das reale Kommunikationsnetzwerk (3) weitergeleitet werden.

15. Verfahren nach einem der Ansprüche 10 bis 13,
**dadurch gekennzeichnet, dass** aus dem simulierten Kommunikationsnetzwerk (18) ankommende Simulations-Datentelegramme (21) von dem Kopplungs-Gerät (22) in Real-Datentelegramme (4) umgewandelt werden, indem die Typenangabe (11) in ankommenden Simulations-Datentelegrammen (21) in die Typenangabe (11) für Real-Datentelegramme (4) abgeändert wird, und so umgewandelte Datentelegramme (4) in das reale Kommunikationsnetzwerk (3) weitergeleitet werden.

16. Verfahren nach Anspruch 15,
**dadurch gekennzeichnet, dass** entweder sämtliche an dem Kopplungs-Gerät (22) ankommende Simulations-Datentelegramme (21) umgewandelt und in das reale Kommunikationsnetzwerk (3) weitergeleitet werden, oder nur Simulations-Datentelegramme (21) umgewandelt und in das reale Kommunikationsnetzwerk (3) weitergeleitet werden, die für wenigstens eine simulierte Steuerung (17) und/oder für ein simuliertes Feldgerät bestimmt sind.

17. Verfahren nach einem der Ansprüche 10 bis 13,
**dadurch gekennzeichnet, dass** aus dem simulierten Kommunikationsnetzwerk (18) an dem Kopplungs-Gerät (22) ankommende Simulations-Datentelegramme (21) herausgefiltert werden, so dass diese nicht in das reale Kommunikationsnetzwerk (3) gelangen.

18. Verfahren nach Anspruch 10, 12 oder 13 und 14,
**dadurch gekennzeichnet, dass** die Steuerung der Anlage mittels einer simulierten Steuerung (17) erfolgt, wobei von der simulierten Steuerung (17) für die physischen Feldgeräte bestimmte Simulations-Datentelegramme (21) abgesendet werden, die von dem Kopplungs-Gerät (22) in Real-Datentelegramme (4) umgewandelt und als Real-Datentelegramme (4) zu den Feldgeräten weitergeleitet und von diesen verarbeitet werden, und von den physischen Feldgeräten für die simulierte Steuerung (17) bestimmte Real-Datentelegramme (4) abgesendet werden, die von dem Kopplungs-Gerät (22) in Simulations-Datentelegramme (21) umgewandelt und als Simulations-Datentelegramme (21) zu der simulierten Steuerung (17) weitergeleitet und von dieser verarbeitet werden.

19. Gerät (22), insbesondere Switch oder Bridge, welches einerseits mit einem Simulationstool verbunden oder verbindbar ist und andererseits mit einem insbesondere Ethernet-basierten Kommunikationsnetzwerk (3) für eine technische Anlage (1) verbunden oder verbindbar ist, und welches ausgebildet und eingerichtet ist,
um eine Typenangabe (11) in Datentelegrammen (21), die im Rahmen einer Simulation (15) des Kommunikationsnetzwerkes (3) entstehen, abzuändern, und die Datentelegramme (4) mit abgeänderter Typenangabe (11) in das Kommunikationsnetzwerk (3) weiterzuleiten,
und/oder
um eine Typenangabe (11) in Datentelegrammen (4), die aus dem Kommunikationsnetzwerk (3) stammen abzuändern, und die Datentelegramme (21) mit abgeänderter Typenangabe (11) an das Simulationstool weiterzuleiten.

20. System für die Simulation des Betriebes einer technischen Anlage (1),
umfassend ein Simulationstool für die Simulation (15) einer technischen Anlage (1) einschließlich eines insbesondere Ethernet-basierten Kommunikationsnetzwerkes (3) einer solchen, sowie
ein Gerät (22), insbesondere in Form eines Switches oder einer Bridge, welches einerseits mit dem Simulationstool verbunden oder verbindbar ist und andererseits mit dem insbesondere Ethernet-basierten Kommunikationsnetzwerk (3) für eine technische Anlage (1) verbunden oder verbindbar ist, und welches ausgebildet und/oder eingerichtet ist, um Datentelegramme (21), die im Rahmen einer Simulation (15) des Kommunikationsnetzwerkes (3) entstehen, unverändert in Richtung des Kommunikationsnetzwerkes (3) weiterzuleiten, und/oder
um eine Typenangabe (11) in Datentelegrammen (21), die im Rahmen einer Simulation (15) des Kommunikationsnetzwerkes (3) entstehen, abzuändern, und die Datentelegramme (4) mit abgeänderter Typenangabe (11) in das Kommunikationsnetzwerk (3) weiterzuleiten,
und/oder
um Datentelegramme (4), die aus dem Kommunikationsnetzwerk (3) stammen unverändert an das Simulationstool weiterzuleiten, und/oder
um eine Typenangabe (11) in Datentelegrammen (4), die aus dem Kommunikationsnetzwerk (3) stammen abzuändern, und die Datentelegramme (21) mit abgeänderter Typenangabe (11) an das Simulationstool weiterzuleiten.

21. Computerprogramm umfassend Programmcode-Mittel zur Durchführung eines Verfahrens nach einem der Ansprüche 1 bis 18, insbesondere bei Ablauf auf einem System nach Anspruch 20.

22. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 18 durchzuführen.
